(19) Europäisches Patentamt
European Patent Office
Office européen des brevets

(11) Publication number: **0 492 712 A1**

(12) # EUROPEAN PATENT APPLICATION

(21) Application number: **91203313.1**

(51) Int. Cl.[5]: **C08F 2/20**, C08F 14/06

(22) Date of filing: **17.12.91**

(30) Priority: **24.12.90 EP 90203504**

(43) Date of publication of application: **01.07.92 Bulletin 92/27**

(84) Designated Contracting States: **BE DE FR GB IT NL**

(71) Applicant: **AKZO N.V.**
**Velperweg 76**
**NL-6824 BM Arnhem(NL)**

(72) Inventor: **Torenbeek, Reinder**
**Ouabbenburgerweg 8**
**NL-7396 NN Terwolde(NL)**
Inventor: **Westmijze, Hans**
**Burgemeester Boreellaan 1**
**NL-7437 BB Bathmen(NL)**
Inventor: **O, Boen Ho**
**Meiboomstraat 109**
**NL-7415 LH Deventer(NL)**

(74) Representative: **Schalkwijk, Pieter Cornelis et al**
**AKZO N.V., Patent Department (Dept. CO),**
**P.O. Box 9300**
**NL-6800 SB Arnhem(NL)**

(54) **Peroxide compositions with ethoxylated water-soluble polymers.**

(57) Peroxide dispersions containing, as a dispersing agent, a polyether polysiloxane or a water-soluble copolymer of a $C_8$-$C_{24}$ $\alpha$-olefin and an $\alpha,\beta$-unsaturated dicarboxylic acid ester which has either been esterified with at least one ethoxylated alcohol having a degree of ethoxylation of 1-45; are disclosed. These peroxide dispersions are millable to small particle sizes, more flexible in their application and do not adversely affect the electrical resistivity of the resultant polymer. Also disclosed are the use of these peroxide dispersions, a polymerizable composition containing these peroxide dispersions and polymeric products produced by the use of these peroxide dispersions.

EP 0 492 712 A1

## FIELD OF THE INVENTION

The present invention relates to polymerization-initiating suspensions and emulsions of organic peroxide compounds dispersed with ethoxylated water-soluble polymers and their use in the polymerization of vinyl chloride and other monomers.

## BACKGROUND OF THE INVENTION

The key components used in the dispersing agents of the present invention include a number of known polymeric compositions which are described in detail in U.S. patent 4,931,197, and in U.S. patent 3,526,651. In these patents, some of the water-soluble polymers used in the dispersing agent of the present invention are disclosed and the methods for making them are also disclosed. In U.S. 4,931,197 it is stated that such polymers are useful as lubricants for the shaping treatment of plastics. Whereas in U.S. 3,526,651 the stated use is as a polyurethane foam stabilizer.

Further, in an Akzo status bulletin dated October 1989, several of the water-soluble polymers in accordance with the present invention, namely Dapral® GE 202 salt, Dapral® GE 205 DMA and Dapral® GE 202, are disclosed as being useful as dispersants for inorganic pigments and fillers, organic pigments and other hydrophobic organic solids in the field of agrochemicals, for example. The article also discusses the viscosities of selected Dapral® mixtures.

In the article, "Organo-Polysiloxane Copolymers," Kollmeier, H.J. and Langenhagen, R.D., Goldschmidt Product Information Leaflet, some of the polymers which are useful in the present invention are disclosed.

Japanese patent application J6 3027-582 published on 5 February 1988, discloses a water-soluble thickener which comprises an ethoxylated or propoxylated addition diol having a comb-like structure. This polymeric thickener is said to exhibit superior viscosity rising effect, solubility in water and the viscosity of solutions thickened with this material is thermally stable.

A peroxide suspension useful in vinyl chloride polymerization is disclosed in British patent specification 1,495,894. These suspensions are made by using a nonylphenyl polyethylene oxide ether, a polyoxyethylene ether or a linear alcohol polyoxyethylene ether. However, the use of such suspensions in vinyl chloride polymerization has a detrimental effect on the electrical properties of the resultant polymer.

Finally, European patent application 0 106 627 published on 23 April 1984 discloses aqueous suspensions of solid, organic peroxides which are stable. The protective colloid in these suspensions is disclosed as being water-soluble cellulose derivatives, partially or wholly saponified polyvinyl acetate, polyvinyl pyrrolidone, polyacrylic acid, polyacrylic acid amide, copolymers of acrylic acid with acrylic esters, carboxyvinyl polymer, gelatin, starch and agar. These protective colloids generally make up from 0.1 to 10 weight percent of the peroxide suspensions.

The main disadvantage of the peroxide suspensions is that they are not universally applicable. Accordingly, a single formulation when used in vinyl chloride polymerization will often provide good properties with respect to one or more features of the polyvinyl chloride, but one or more other properties will suffer. Accordingly, it is often necessary to tailor specific peroxide suspensions to their intended use and to sacrifice one property in favor of others.

More specifically speaking, many peroxide suspensions used in vinyl chloride polymerization exhibit an effect on the polymer morphology, the electrical properties of the polymer, porosity and fish-eye level.

Further, these peroxide suspensions suffer from other disadvantages such as high viscosities which make them difficult to handle, or, in some cases the suspensions cannot be milled to reduce peroxide particle size.

Accordingly, there is a need for peroxide suspensions which are generally applicable in vinyl chloride polymerization, as well as peroxide suspensions having an acceptable viscosity and which can be prepared with a very small particle size. These and other objects of the present invention will be apparent from the summary and detailed decription which follow.

## SUMMARY OF THE INVENTION

The present invention relates to a polymerization-initiating dispersion which contains 5-75% by weight of an organic peroxy compound and a sufficient amount to disperse said peroxide in said aqueous medium, of a dispersing agent which comprises a copolymer selected from a first copolymer of at least one $\alpha,\beta$-unsaturated dicarboxylic acid ester and at least one $C_8$-$C_{24}$ $\alpha$-olefin, said dicarboxylic acid component of said copolymer being esterified by at least one ethoxylated alcohol having a degree of ethoxylation of 1-45; and a second polyether polysiloxane copolymer.

The present invention also relates to a process for the polymerization of vinyl chloride alone or in admixture with up to 90 weight percent of one or more vinyl halides, vinylidene monomers copolymerizable therewith, oligomers or (co)polymers of the aforementioned monomers and mixtures of one or more of the monomers, oligomers and (co)polymers, characterized in that, as a polymerization catalyst is used, the polymerization-initiating dispersion as set forth above.

The present invention, in other embodiments, also relates to a polymer manufactured by the foregoing polymerization process, a polymerizable composition comprising the polymerization-initiating dispersion and vinyl chloride alone or in admixture with up to 90 weight percent of one or more vinyl halides, vinylidene monomers copolymerizable therewith, oligomers or (co)polymers of the aforementioned monomers and mixtures of one or more of the monomers, oligomers and (co)polymers, and to the use of the polymerization-initiating dispersion as a polymerization catalyst for the polymerization of vinyl chloride or vinyl chloride-containing monomeric admixtures.

## DETAILED DESCRIPTION OF THE INVENTION

The first aspect of the present invention relates to polymerization-initiating dispersions of organic peroxy compounds containing a particular dispersing agent. By dispersion, as used in this patent application, is meant either an aqueous suspension of the peroxide or a water-containing emulsion of the peroxide.

Particularly, preferred peroxides for use in the present invention are the peroxydicarbonates, diacylperoxides, sulfonyl peroxides and peroxyesters. Specifically, the most preferred peroxides are dicyclohexyl peroxydicarbonate, tertiary butyl peroxy neodecanoate, cumyl peroxy neodecanoate, di-sec-butyl peroxydicarbonate, bis(4-tertiary-butylcyclohexyl) peroxydicarbonate, dimyristyl peroxydicarbonate, bis(2-ethylhexylperoxy) dicarbonate, dicetylperoxy dicarbonate, di-decyl peroxydicarbonate, bis-3,5,5-trimethylhexanoyl peroxide, di-decanoyl peroxide, di-lauroyl peroxide, bis(o-methylbenzoyl) peroxide, bis(m-methylbenzoyl) peroxide, dicumyl peroxide, diisopropyl peroxydicarbonate, acetylcylcohexylsulfonyl peroxide, 2,5-dihydroperoxy-2,5-dimethyl hexane, di-t-butylperoxy isopthalate, 1,1'-di-hydroxydicyclohexyl peroxide and 2,4,4-trimethylpentyl peroxyneodecanoate.

The amount of organic peroxide in the aqueous suspension or emulsion falls in the range of 5-75% by weight, based on the weight of the dispersion. More preferably, there is 10-70% by weight of peroxide and most preferably, 20-60% by weight of peroxide is present. At concentrations of less than 5% by weight the cost of transportation of the peroxide becomes very high and at concentrations above 75% by weight the products cannot be easily handled.

The dispersing agent of the present invention contains a polyether polysiloxane and/or a water-soluble copolymer of at least one $\alpha,\beta$-unsaturated dicarboxylic acid ester and at least one $C_8$-$C_{24}$ $\alpha$-olefin, said dicarboxylic acid component of said copolymer being esterified by at least one ethoxylated alcohol having a degree of ethoxylation of 1-45.

The copolymers of $\alpha$-olefin and dicarboxylic acid ester generally have a molar ratio of $\alpha$-olefin to $\alpha,\beta$-unsaturated dicarboxylic acid ester of 0.5-4. Such copolymers, and the methods for their manufacture, are described in detail in U.S. patent 4,931,197, which description is hereby incorporated by reference.

The copolymers of $\alpha$-olefin and dicarboxylic acid ester may be esterified by at least one ethoxylated alcohol having a degree of ethoxylation of 1-45. Such ethoxylated alcohols may also contain propoxy groups. If propoxy groups are present it is preferred that the degree of propoxylation be 1-10, in addition to the ethoxy groups in the ethoxylated alcohol.

The polyether polysiloxane copolymers useful as dispersing agents in the present invention are copolymers of polyalkylene oxides with organo-polysiloxanes of the formula I:

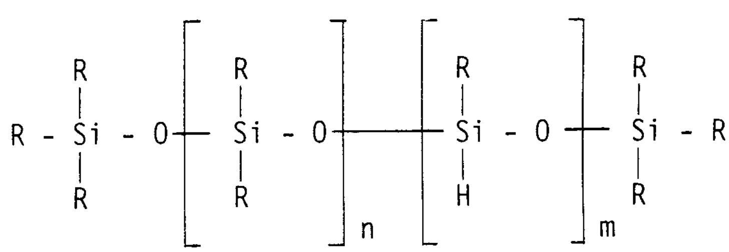

wherein n = 0-300, m = 0-100 and R is independently selected from hydrogen, $C_1$-$C_6$ lower alkyl and phenyl.

Examples of block copolymers of this type, and methods for making them, are described in U.S. patent 3,526,651. The copolymers of the present invention are not to be limited to block copolymers but also include other copolymer configurations.

Copolymers of the polysiloxanes and ethoxylated polyalkylene oxides are preferred in the present invention, although propoxy groups may also be present so long as the do not significantly detract from the hydrophilicity of the ethoxy groups.

In the suspensions and emulsions of the present invention from 1 to 20% by weight, on dispersed phase, of the dispersing agent may be employed. More preferably, the dispersing agent makes up 3 to 15% by weight, and most preferably from 5 to 8% by weight.

The dispersing agent used in the compositions of the present invention may contain, in addition to the copolymer, one or more of vinyl alcohol copolymers, polyvinyl alcohols, sucrose esters, sorbitan esters, polyvinyl pyrrolidone, vinyl pyrrolidone, vinyl acrylate and cellulose esters.

More particularly, polyvinyl alcohols having a degree of hydrolysis of between 40 and 100 are especially useful in the dispersing agents of the present invention. Further, compounds such as hydroxyethylcellulose, hydroxypropylcellulose, methylcellulose, hydroxybutylcellulose and carboxymethyl cellulose are also useful in the dispersing agents of the present invention. These mixed dispersant systems can, under some circumstances, give improvements in polymer morphology, composition viscosity and other properties.

The primary advantage of the present invention is that it provides a physically stable, low viscosity, peroxide dispersion with a small average particle or droplet size and a good particle or droplet size distribution, which can be used in vinyl chloride polymerizations without detrimentally effecting the electrical properties of the polymer. Further, the polymerization-initiating compositions of the present invention do not adversely effect other properties of the resultant polyvinyl chloride (PVC), and, in some cases actually improve properties such as fish eye-level and morphology in the resultant polymers. In addition, the polymerization initiators of the present invention provide advantages in use, such as flexible dosing to the polymerization reactor.

The dispersions of the present invention are easily made by any conventionally known manner for making peroxide dispersions. More particularly, one need only mix the peroxide, water and the dispersing agent with stirring to form the dispersion. However, if desired, more complex processes, such as that in European patent application 106 627, may be employed. The peroxide may be employed in dry form, as a paste or as a wet filter cake.

Once the dispersion is made, it can be milled with an apparatus such as a Perl Mill in order to further reduce the particle size of the peroxides. This provides advantages in the polymeric end product. It is suprising and unexpected that such a milling process can be carried out on the dispersions of the present invention since dispersions with partially saponified polyvinyl acetate cannot be milled because they form a thick paste in the mill.

Standard additives may be used in the dispersions of the present invention. More particularly, surfactants such as are listed in European patent application 106 627 may be employed. Further, other additives including anti-settling agents, such as natural gums, pH-adjusting agents, such as calcium oxide, sequestering agents and perhaps, under some circumstances thickening agents, may be used.

A particularly important class of additional additives are the antifreeze agents which are described in U.S. patent 4,950,422, the disclosure of which is hereby incorporated by reference. More particularly, antifreeze agents such as $C_1$-$C_4$ alkanols and $C_2$-$C_4$ alkanediols may be incorporated into the emulsions of the present invention to improve their storageability and transportability. Generally such agents will comprise at least 2 weight percent of the emulsion and preferably they comprise from 2-30 weight percent and more preferably from 5-20 weight percent of the emulsions.

In a second aspect, the present invention also relates to the use of the above-described dispersions as polymerization catalysts in the polymerization of vinyl chloride alone or in admixture with up to 90 weight percent of one or more vinyl halides, vinylidene monomers copolymerizable therewith, oligomers and (co)-polymers of the aforementioned monomers and mixtures of two or more of these monomers, oligomers and polymers. The use of these dispersions is further detailed below.

In a third aspect, the present invention also relates to a composition comprising the polymerization-initiating dispersion and a polymerizable vinyl chloride monomer either alone or in admixture with up to 90 weight percent of one or more vinyl halides, vinylidene monomers copolymerizable therewith, oligomers and polymers of the aforementioned monomers, and mixtures of two or more of these materials. Such compositions may include one or more additives such as are named herein for the dispersions, as well as phosphate buffers.

The materials polymerizable by the present polymerization process include vinyl halides and particularly vinyl chloride and vinylidene monomers having at least one terminal unsaturated group. Examples of vinylidene monomers having at least one terminal unsaturated group include esters of acrylic acid such as methyl acrylate, ethyl acrylate, butyl acrylate, octyl acrylate, cyanoethyl acrylate and the like, esters of methacrylic acid such as methyl methacrylate, butyl methacrylate, and the like, styrene and styrene derivatives including $\alpha$-methylstyrene, vinyl toluene, chlorostyrene and the like, acrylonitrile, ethyl vinyl benzene, vinyl acetate, vinyl naphthalene, etc. and di-olefins including, but not limited to, butadiene, isoprene, chloroprene, and the like and other vinylidene monomers known to those of ordinary skill in the art. These monomers listed above, except the vinyl halides, are referred to as vinylidene monomers in this document.

In addition, oligomers and polymers made from one or more of the above-identified monomers may also be polymerized by the present polymerization process with other monomers, polymers or oligomers. Of course, mixtures of two or more of the polymerizable materials may be used. In all cases there will be at least 10% of vinyl chloride monomer, oligomer or polymer in the polymerizable mixture.

In general, the polymerization-initiating suspension comprises 0.01-6.0% pure peroxide, based on the polymerizable materials, and when polymerizing vinyl chloride alone, preferably 0.01-0.3% pure peroxide, based on the polymerizable materials.

In a fourth aspect, the present invention relates to a process for the polymerization of vinyl chloride alone or in admixture with up to 90 weight percent of one or more vinyl halides, vinylidene monomers copolymerizable therewith, oligomers or polymers of these monomers and mixtures of two or more of the monomers, oligomers or polymers. In this polymerization process, the above-described polymerization-initiating dispersion is employed as a polymerization catalyst.

One of the significant advantages of the present process for the polymerization of vinyl chloride is that the use of the particular polymerization catalyst of the present invention leads to greater flexibility in the polymerization process itself. More particularly, with present solid peroxide compositions used in vinyl chloride polymerization, the peroxide composition must be added to the polymer before the mixture is brought to the polymerization temperature in order to avoid adverse effects, such as increased fish eye levels, on the properties of the resultant polymer. However, in the process of the present invention, the polymerization catalyst may be added to the vinyl chloride monomer after it is heated to the polymerization temperature or may even be dosed stepwise or gradually during the polymerization reaction. These features provide greater flexibility in the polymerization process as well as a means to obtain better control over the process and the products of the process.

The polymerization process of the present invention is typically a suspension polymerization process wherein an aqueous dispersion of vinyl chloride monomer and the polymerization catalyst is heated to cause polymerization of the monomer as a result of free radical decomposition of the polymerization catalyst. The polymerization conditions employed are the conventional conditions for the polymerization of vinyl chloride monomer. For a detailed description of the process conditions, as well as the type of monomers which can be polymerized in this method, one is referred to U.S. patent 3,825,509, the disclosure of which is hereby incorporated by reference.

The present process, however, may differ slightly from that of U.S. patent 3,825,509 in that, it is not necessary to add the ingredients to the polymerization reactor in the order of water, dispersant, polymerization catalyst and finally, monomer. While this conventional methodology is within the scope of the present invention, the present invention also encompasses reactions wherein the water, dispersing agent and monomers are first added to the reactor and heated to the polymerization temperature prior to the introduction of the polymerization catalyst. In such reactions, the polymerization catalyst may be added all at once, gradually or stepwise during the polymerization process.

Previously, it was considered disadvantageous to add the polymerization catalyst at the reaction temperature since fish eye level was increased. In the examples appended to this specification it is demonstrated that the present dispersions do not significantly increase the fish eye level and that the dosing at reaction temperature leads to other advantages in the polymerization process.

In a final aspect, the present invention also relates to vinyl chloride-containing polymers produced by the process of the present invention. These polymers exhibit different properties than other vinyl chloride-containing polymers including better electrical properties, lower fish eye level and, in some instances, improved polymer morphology.

The following examples are provided to further illustrate the present invention and are not to be interpreted as limiting the invention in any way.

Example 1

A suspension was prepared containing 40 wt% of bis(4-tertiary butyl cyclohexyl) peroxydicarbonate, 1.5 wt% of a water-soluble polymer made by copolymerization of a $C_{14}$-$C_{16}$ α-olefin and maleic anhydride and subsequently treating the polymer with methoxy polyethylene glycol as described in example 1 of EP 0 075 216; 0.15 wt% xanthan gum (anti-settling aid), 0.02 wt% calcium oxide (pH adjusting agent) and the balance water.

The suspension was prepared by mixing the peroxide, in the form of a wet filter cake containing about 50 wt% of peroxide, additional water and the water-soluble polymer with a turbine-type stirrer. A thin, flowable suspension was obtained. The xanthan gum and the calcium oxide were then admixed over a period of ½ hour. The suspension was first dispersed with an Ultra-Turrax® rotor-stator dissolver and next milled with a Drais® Perl Mill PM1. The suspension was then deaerated.

The viscosity of the suspension was then determined with a HAAKE® Rotovisco RV2 rotation viscometer. At a shear rate D = 200 1/s, the apparent viscosity was 149 mPa.s. The particle size distribution was determined with a Malvern Particle Sizer M3. 50% of the peroxide particles were under 5.4 µm, 90% under 13.0 µm, and 99% under 26.4 µm. It was possible to further mill the suspension with the Perl Mill to further reduce the peroxide particle size without loss of the fluidity of the suspension.

Comparative Example A

A suspension was prepared with the same composition and by the same method as in Example 1 except that partially saponified polyvinyl acetate having a degree of saponification of 73% was substituted for the water-soluble polymer. This suspension could only be dispersed by using the Ultra-Turrax® rotor-stator dissolver and could not be milled with the Perl Mill because it became a thick paste in the mill and carried away the balls from the mill.

After the dispersion with the Ultra-Turrax®, the viscosity at D = 200 1/s was 504 mPa.s and 50% of the peroxide particles were under 9.8 µm, 90% under 37.2 µm and 99% under 52.4 µm.

These two examples demonstrate that the dispersing agent of the present invention provides a lower viscosity suspension than does partially saponified polyvinyl acetate, and that the particle size of the suspension can be significantly reduced by milling the suspension without loss of flowability of the suspension, whereas the prior art suspending agent gives a suspension which cannot be milled.

Example 2

In view of the fact that, to this date, it has not been possible to prepare a flowable suspension of dimyristyl peroxy dicarbonate with partially saponified polyvinyl acetate as the dispersing agent, it was decided to try to prepare a suspension of dimyristyl peroxy dicarbonate with the dispersing agent of the present invention.

Accordingly, a flowable suspension was prepared by the process of claim 1 using 40 wt% dimyristyl peroxy dicarbonate flakes, 3 wt% water-soluble polymer, and the balance demineralized water. The peroxide flakes were reduced to small particles with the Ultra-Turrax® and a very thin suspension resulted which could be milled with a Perl Mill. After once through the Perl Mill 50% of the peroxide particles were under 9.1 µm, 90% under 24.5 µm and 99% under 55 µm.

Example 3

A suspension with 40.7 wt% dicyclohexylperoxydicarbonate (98.2% purity), 1.5 wt% water-soluble polymer, 0.2 wt% Xanthan gum, <0.1 wt% sulphuric acid and 57.6 wt% demineralized water was prepared following the procedure described in Example 1. A stable and pourable suspension was obtained which shows a particle size of 50% less than 4.4 µm and 99% less than 23.3 µm. The viscosity was 50 mPa.s and the pH was about 5.

Examples 4-6

In order to demonstrate that other water-soluble polymers work in the invention, a water soluble polymer (polymer 2) was made from a 1/1 ratio of a $C_{18}$-$C_{22}$ α-olefin and maleic anhydride and was then ethoxylated with methoxypolyethylene glycol 350 ($CH_3O(CH_2CH_2O)_7H$). This polymer is somewhat more hydrophobic than that of Example 1.

A second water-soluble polymer (polymer 3) was made from a 1/2 ratio of a $C_{12}$-$C_{14}$ α-olefin and maleic anhydride and was then ethoxylated with methylpolyethylene glycol 350. This polymer is somewhat

more hydrophilic than that of Example 1.

Three suspensions were prepared with 40 wt% bis(4-tertiary butylcyclohexyl) peroxydicarbonate, 1.5 wt% of the water-soluble polymers of this example, 0.2 wt% xanthan gum, 0.02 wt% calcium oxide and the balance demineralized water. The first suspension contained the water-soluble polymer of Example 1 (suspension 3), the second suspension contained polymer 2 (suspension 4) and the third suspension contained polymer 3 (suspension 5).

The viscosity of suspension 3 was 135 mPa.s, of suspension 4 was 195 mPa.s, and of suspension 5 was 140 mPa.s. All suspensions were pourable and millable.

Examples 7-9

The polymers of Examples 7-9 are water-soluble polyether polymethyl siloxanes. The polyether group of polymer 7 consists of glycoether groups. In case of polymer 8 this group also consists of propoxy groups. Polymer 9 is the trisiloxane version of polymer 7.

Suspensions were prepared using these polymers. The exact composition of the suspensions were as follows: 72.3 wt% of a belt filter cake of bis(4-tertiary-butyl-cyclohexyl) peroxydicarbonate (55.3%), 0.2 wt% xanthan gum, 4.0 wt% of a 0.1 mole/l phosphate buffer giving pH = 8, 22.0 wt% demineralized water and 1.5 wt% of one of polymers 7-9. The method of preparation was adopted from Example 1.

Excellent, pourable suspensions were obtained in each of the cases. Particle sizes ranged from 50% smaller than 4.4 µm to 99% smaller than 12.9 µm. After three months of ageing no separation could be observed. The viscosity was still low. None of the samples showed a viscosity level higher than 270 mPa.s.

Example 10

A suspension was prepared following the recipe of Examples 7-9 and the procedure of Example 1, except that a 1:1 mixture of the polymer of Example 1 and polymer 3 of Example 6 was used. A thin suspension was obtained. The viscosity was about 110 mPa.s. This example illustrates the good synergism of the polymers in order to give low viscosity suspensions.

Example 11

A suspension was prepared with 40 wt% bis(4-tertiary butylcyclohexyl) peroxydicarbonate, 0.75 wt% of the polymeric dispersing agent of Example 1, 0.75 wt% of polyvinylalcohol dispersing agent, 0.15 wt% Rhodigel® and the balance demineralized water. After dispersion with the Ultra-Turrax® a good suspension was obtained with a viscosity of 200 mPa.s. This suspension could be milled with a Perl Mill to produce a thixotropic product which could then be made flowable again by the application of shear. In contrast, the suspension of comparative example A could not be milled at all.

Example 12

A suspension was prepared with the water-soluble polymeric dispersant of Example 1 and having a composition of 40 wt% dilauroyl peroxide, 3.0 wt% water-soluble polymeric dispersant, 0.2 wt% xanthan gum and the balance demineralized water.

The suspension was prepared by mixing the components for ½ hour with a turbine stirrer, then dispersing for 5 minutes with an Ultra-Turrax® and passing through the Perl Mill. After deaeration, a thin, flowable suspension resulted with an apparent viscosity of 140 mPa.s and a particle size of 50% under 9.7 µm and 99% under 44.6 µm.

Example 13

A suspension was prepared with 40 wt% of dicetylperoxy dicarbonate, 3.0 wt% of the polymeric dispersant of Example 1, 0.15 wt% xanthan gum and the balance demineralized water. The peroxide used to make the suspension was in the form of a wet filter cake having a 65.7% peroxide content. It was mixed with the dispersing agent and xanthan gum and diluted to 40% peroxide content with demineralized water.

After dispersing, milling and deaeration, a stable liquid suspension was obtained with an apparent viscosity of 135 mPa.s and a particle size of 50% under 4.1 µm and 99% under 16.1 µm.

Example 14

The water-soluble polymeric dispersant of Example 1 was used to prepared an emulsion with 52 wt% bis(2-ethylhexylperoxy) dicarbonate (98%), 2 wt% water-soluble polymer, 13.6 wt% methanol and 33.4 wt% demineralized water.

The emulsion was prepared by dissolving the water-soluble polymer dispersing agent in a mixture of methanol (the anti-freeze agent) and water, cooling this solution to below 0 °C and emulsifying the peroxide into this solution with the Ultra-Turrax®. The temperature was not allowed to exceed 10 °C during this process. The emulsion had a droplet size of 50% under 2.2 µm and 99% under 5.0 µm. The viscosity was 70 mPa.s at 0 °C. It was stored at -10 °C for six months. After this time the droplet size remained the same and an insignificant degree of phase separation was observed. The emulsion was still useful for its intended purpose.

Example 15

An emulsion with 71 wt% bis(2-ethylhexylperoxy) dicarbonate (>99%), 2.8 wt% water-soluble polymer, 7.6 wt% methanol and 18.7 wt% demineralized water was prepared following the procedure of Example 14. The emulsion had a droplet size of 50% below 2.6 µm and 99% smaller than 5.4 µm. The viscosity was 190 mPa.s at 0 °C. After 6 months of storage at 10 °C the emulsion showed no separation of any significance. The droplet size slightly changed to 50% below 3.2 µm and 99% below 6.0 µm. The viscosity also showed very limited changes.

Comparative Example B

An emulsion with 65 wt% bis(2-ethylhexylperoxy) dicarbonate (>99%), 2.0 wt% partially saponified polyvinyl acetate having a degree of saponification of 73%, 9.0 wt% methanol and 24.0 wt% demineralized water was prepared following the procedure of Example 14, except that a turbine stirring device was employed. The emulsion was very thick and did not allow for a treatment with the Ultra Turrax®. The droplet size was on average 10 µm in diameter.

Example 16

The water-soluble polymeric dispersant of Example 1 was used to prepare a 75 wt% emulsion of bis(2-ethylhexylperoxy) dicarbonate (98% purity). 2.4 wt% of the polymeric dispersant was employed along with 10.3 wt% methanol and 25.3 wt% demineralized water. Both preparation and characterization methods were identical to that of Example 8.

This emulsion was very fine having a droplet size of 50% under 0.9 µm and 99% under 2.4µm. The viscosity was 3900 mPa.s at 0 °C. Thus, high concentration emulsions having a relatively low viscosity may be prepared with the polymeric dispersant of the present invention.

Example 17

Using the method of Example 14, a 50 wt% emulsion of bis(3,5,5-trimethylhexanoyl) peroxide was prepared using 3 wt% of the polymeric dispersing agent of Example 1. The emulsion had a viscosity of 88 mPa.s and a droplet size of 50% under 1.9 µm and 99% under 4.3 µm.

Example 18

An emulsion was prepared containing 46 wt% of cumyl peroxy-neodecanoate (83% purity), 20 wt% methanol, 4.0 wt% of a water-soluble polymer made by copolymerization of a $C_{18}$-$C_{22}$ α-olefin and maleic anhydride in a mole ratio of 1:1, and subsequently treating the polymer with methoxy polyethylene glycol 350 (polymer 2) and balance water.

After the dispersion with the Ultra Turrax®, the viscosity at 0 °C was 190 mPa.s and 50% of the droplets were under 2.3 µm and 99% under 8.3 µm.

Comparative example C

The same emulsion as in Example 18 was prepared, except that the water-soluble polymer (polymer 2) was replaced by a partially saponified polyvinyl acetate having a degree of saponification of 73%. After the dispersion with the Ultra Turrax®, the viscosity at 0 °C was 380 mPa.s and 50% of the droplets were under

2.5 µm and 99% under 3.2 µm.

Example 19

Polymerization of vinyl chloride monomer with the peroxide suspension of Example 1.

A five liter Buchi stainless steel autoclave with stirrer and baffle was filled with aqueous protective colloid solution in which the phosphate buffer was solved. The reactor was then evacuated and flushed with nitrogen four times while stirring. The mixture was then heated to reaction temperature (53.5 °C) followed by addition of the vinyl chloride monomer and enough of the polymerization-initiating suspension of Example 1 to provide 0.07% pure peroxide, based on the vinyl chloride monomer. After 6 hours the reactor was cooled and excess vinyl chloride monomer was vented. The polyvinyl chloride was filtered, washed dried overnight at 50 °C, weighed and analyzed. The results of the analysis are given in Table 1.

Comparative Examples D and E

The same vinyl chloride monomer polymerization procedure as in Example 19 was used except that for Example D was used a conventional suspension of the same peroxide as used in Example 1 with ethoxylated nonyl phenol dispersing agent. For Example E the electrical grade of the same suspension as Example D was used wherein some of the ethoxylated nonyl phenol is substituted by polyvinyl alcohol. The results of the polyvinyl chloride analysis for these two examples are also given in Table 1.

The fish eye level was determined in accordance with the method of 0. Leuchs, Kunststoffe, 50(4) 1960, pp. 227-234. The conversion was measured by weighing and the bulk density by an Erichsen DIN cup 243/11.8. The polyvinyl chloride mean particle size was determined by a Coulter Counter (multisizer) and the electrical resistivity was measured by the standard ASTM method.

Table 1

| Example | Electrical Resisivity (ohm/cm) | Conversion (%) | Bulk Density (g/cm$^3$) | Median partical size(µm) | Fish Eyes (dm$^{-2}$) |
|---|---|---|---|---|---|
| 19 | $4.9 \times 10^{13}$ | 84.9 | 0.45 | 210 | 6 |
| D | $3.0 \times 10^{13}$ | 83.9 | 0.45 | 180 | 170 |
| E | $5.0 \times 10^{13}$ | 85.9 | 0.45 | 210 | 1500 |

Examples 19 and D-E demonstrate that good electrical properties are obtained by polymerization using the suspensions of the present invention along with significantly less fish eyes in the final product thereby producing a polyvinyl chloride of better quality.

Example 20

The suspension of Example 10 (including the polymer of Example 4) was used to polymerize vinylchloride. The same procedure as in Example 19 was applied. PVC particles were obtained which showed a fish eye level of 25/dm$^2$.

This example illustrates that the improvement of the PVC quality obtained with the suspension of polymer 1 is reproduced by using a suspension of polymer 3. It also shows that such a result may be obtained when comblike polymers are applied.

Examples 21-22

The suspensions of Examples 2 and 13, respectively, were used in vinyl chloride monomer polymerization. Again, the 5 liter Buchi stainless steel autoclave with stirrer and baffle was filled with an aqueous protective colloid solution in which a phosphate buffer was dissolved.

Enough of the peroxide suspension was added to the reactor to give the amount of pure peroxide indicated in Table 2, on the basis of the weight of the vinyl chloride monomer, and the reactor was then evacuated and flushed with nitrogen four times while stirring, followed by adding the vinyl chloride monomer at ambient temperature. The reactor was then heated to a reaction temperature of 57 °C over a 60 minute period. After 6 hours at 57 °C, the reactor was cooled and excess vinyl chloride monomer was vented. The polyvinyl chloride was filtered, washed, dried overnight at 50 °C, weighed and analyzed. The

results are given in Table 2.

Comparative Examples F and G

The same polymerization procedure as in Examples 21-22 was used except that in the peroxide suspensions ethoxylated nonyl phenol dispersing agent was employed in place of the polymeric dispersing agent of the present invention. The results of the polyvinyl chloride analysis are also given in Table 2.

Table 2

| Example | Amt. of Peroxide | Conversion (%) | Electrical Resistivity (ohm/cm) |
|---|---|---|---|
| 21 | .072% | 85.0 | $3.00 \times 10^{13}$ |
| 22 | .086% | 85.0 | $3.10 \times 10^{13}$ |
| F | .072% | 85.8 | $1.70 \times 10^{13}$ |
| G | .086% | 84.9 | $1.45 \times 10^{13}$ |

Examples 21-22 and F-G demonstrate that peroxide suspensions of the present invention are good initiators for vinyl chloride polymerization and give better electrical resistivity than conventional ethoxylated nonyl phenol based peroxide suspensions.

Example 23

Dosing of additional peroxide during the polymerization to increase polymer yield, or to better control the polymerization rate during the process.

The procedure of Example 19 was used to polymerize vinyl chloride monomer with the suspension of Example 1 (also used in Example 19) except that after 3 hours of the polymerization, an additional dosage of the peroxide suspension was added to the polymerization reaction mixture. The results of the polyvinyl chloride analysis are given in Table 3.

Comparative Example H

The procedure of Example 23 was repeated using the commercial electrical grade of peroxide suspension employed in Comparative Example E. The results of the polyvinyl chloride analysis are given in Table 3.

Table 3

| Example | Conversion (%) | Median Particle size (μm) | Fish Eyes ($dm^{-2}$) |
|---|---|---|---|
| 23 | 89.9 | 200 | 25 |
| H | 89.8 | 190 | 200 |

Examples 23 and H demonstrate the drastic reduction in fish eyes achieved by employing the peroxide suspension of the present invention during the polymerization reaction to increase polymer yield.

The foregoing examples have been presented for the purposes of illustration and description only and the scope of the invention is to be determined from the claims appended hereto.

**Claims**

1. A polymerization-initiating aqueous dispersion which contains 5-75% by weight of at least one organic peroxy compound and a sufficient amount to disperse said peroxide in said aqueous medium, of a dispersing agent which comprises a first copolymer selected from a copolymer of at least one $\alpha,\beta$-unsaturated dicarboxylic acid ester and at least one $C_8$-$C_{24}$ $\alpha$-olefin, said dicarboxylic acid component of said first copolymer being esterified by at least one ethoxylated alcohol having a degree of ethoxylation of 1-45; and a second copolymer of at least one polyalkylene oxide and a polysiloxane of

the formula I:

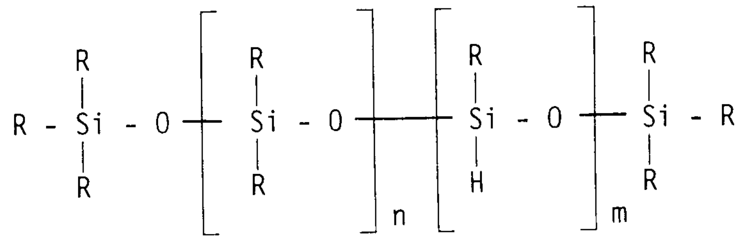

wherein n = 0-300, m = 0-100 and R is independently selected from hydrogen, $C_1$-$C_6$ lower alkyl and phenyl.

**2.** A polymerization-initiating dispersion as claimed in claim 1 wherein said dispersion comprises 1-20% by weight, based on the dispersed phase, of said dispersing agent.

**3.** A polymerization-initiating dispersion as claimed in any one of claims 1-2 wherein the molar ratio of said $\alpha$-olefin to said $\alpha,\beta$-unsaturated dicarboxylic acid ester in said first copolymer is 0.5-4.

**4.** A polymerization-initiating dispersion as claimed in any one of claims 1-3 wherein said dispersing agent further comprises at least one compound selected from polyvinyl alcohol, vinyl alcohol copolymers, sucrose esters, sorbitan esters, polyvinyl pyrrolidone, vinyl acrylate and cellulose ether.

**5.** A polymerization-initiating composition as claimed in any one of claims 1-4 further comprising at least 2 weight percent of at least one compound selected from $C_1$-$C_4$ alkanols and $C_2$-$C_4$ alkane diols.

**6.** A polymerization-initiating composition as claimed in any one of claims 1-5 wherein said organic peroxy compound is selected from peroxydicarbonates, diacyl peroxides and peroxyesters.

**7.** A process for the polymerization of vinyl chloride alone or in admixture with up to 90 weight percent of one or more vinyl halides, vinylidene monomers copolymerizable therewith, oligomers and polymers of the aforementioned monomers and mixtures of two or more of said monomers, oligomers and polymers, characterized in that, as a polymerization catalyst is used, a polymerization-initiating dispersion as claimed in any one of claims 1-6.

**8.** A process in accordance with claim 7 wherein said polymerization catalyst is dosed at the polymerization temperature to a polymerizable composition comprising water and vinyl chloride alone or in admixture with up to 90 weight percent of one or more vinyl halides, vinylidene monomers copolymerizable therewith, oligomers and polymers of the aforementioned monomers, and mixtures of two or more of said monomers, oligomers and polymers.

**9.** A process in accordance with claim 7 wherein said polymerization catalyst is stepwise or gradually dosed during polymerization to a polymerizable composition comprising water and vinyl chloride alone or in admixture with up to 90 weight percent of one or more vinyl halides, vinylidene monomers copolymerizable therewith, oligomers and polymers of the aforementioned monomers, and mixtures of two or more of said monomers, oligomers and polymers.

**10.** A polymer manufactured by a process in accordance with any one of claims 7-9.

**11.** A polymerizable composition comprising a polymerization-initiating dispersion as claimed in any one of claims 1-6 and vinyl chloride monomer alone or in admixture with up to 90 weight percent of one or more vinyl halides, vinylidene monomers copolymerizable therewith, oligomers or polymers of the aforementioned monomers, and mixtures of two or more of said monomers, oligomers and polymers.

**12.** Use of a composition in accordance with any one of claims 1-6 as a polymerization catalyst for the polymerization of vinyl chloride alone or in admixture with up to 90 weight percent of one or more vinyl halides, vinylidene monomers copolymerizable therewith, oligomers or polymers of the aforementioned

monomers and mixtures of two or more of said monomers, oligomers and polymers.

European Patent Office

# EUROPEAN SEARCH REPORT

Application Number

EP 91 20 3313

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 038 643 (DENKI KAGAKU KOGYO K. K.)<br>* page 15-16 *<br>* page 20, paragraph 2; claims 1-11 * | 1 | C08F2/20<br>C08F14/06 |
| A | GB-A-804 448 (MONSANTO CHEMICAL)<br>* claims 1-12 * | 1 | |
| A | US-A-4 376 719 (D. GOODMAN)<br>* claims 1-5 * | 1 | |
| A | DE-B-1 224 497 (HÜLS)<br>* claim 1 * | 1 | |
| A<br><br>D,A | EP-A-0 075 216 (AKZO)<br>* claims 1-12 *<br>&US-A-4931197 | 1 | |
| A | DD-A-257 434 (VEB CHEMISCHE WERKE BUNA)<br>* the whole document * | 1 | |
| | | | **TECHNICAL FIELDS SEARCHED (Int. Cl.5)** |
| | | | C08F |

The present search report has been drawn up for all claims

| Place of search | Date of completion of the search | Examiner |
|---|---|---|
| THE HAGUE | 26 MARCH 1992 | PERMENTIER W.A. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)